# NEUE EUROPÄISCHE PATENTSCHRIFT

(11) **EP 1 586 776 B2**
(45) Veröffentlichungstag und Bekanntmachung des Hinweises auf die Entscheidung über den Einspruch: **08.09.2021**
(45) Hinweis auf die Patenterteilung: 23.10.2013
(21) Anmeldenummer: 05004143.3
(22) Anmeldetag: 25.02.2005
(51) Int. Cl.: F23M 5/08

(54) **Heizgerät für ein Fahrzeug**
Car heating apparatus
Appareil de chauffage automobile

(30) Priorität: 15.04.2004 DE 102004018298
(43) Veröffentlichungstag der Anmeldung: 19.10.2005
(73) Patentinhaber: Eberspächer Climate Control Systems GmbH, 73730 Esslingen (DE)
(72) Erfinder: Burner, Erwin, 73099 Adelberg (DE)
(74) Vertreter: Ruttensperger Lachnit Trossin Gomoll

(56) Entgegenhaltungen:
- EP-A- 0 857 916
- DE-A1- 4 444 810
- DE-C1- 4 311 080
- DE-C1- 10 118 224
- FR-A- 2 661 759
- US-B1- 6 462 494

## Beschreibung

Die vorliegende Erfindung betrifft ein Heizgerät für ein Fahrzeug, welches Heizgerät ein Verbrennungsluftgebläse mit einem Elektromotor sowie ein Ansteuergerät dafür aufweist. Ferner betrifft die vorliegende Erfindung ein Verfahren zum Betreiben eines Elektromotors, beispielsweise eines derartigen Verbrennungsluftgebläses.

Bei brennstoffbetriebenen Heizgeräten in Fahrzeugen wird die für die Verbrennung erforderliche Verbrennungsluft im Allgemeinen unter Einsatz eines Verbrennungsluftgebläses herangefördert. Derartige Gebläse weisen allgemein einen Elektromotor auf, der unter der Ansteuerung eines im Betrieb eine Spannung an diesen anlegenden oder das Anlegen steuernden/regelnden Ansteuergeräts steht. Aus Gründen des einfacheren und kostengünstigeren Aufbaus werden im Betrieb derartige Elektromotoren nicht drehzahlgeregelt, sondern werden in Zuordnung zu dem geforderten Betrieb bzw. der geforderten Verbrennungsluftmenge durch Anlegen, einer diesem Betrieb zugeordneten Spannung betrieben. Dabei kann zuvor im Versuch ein Zusammenhang zwischen der geförderten Verbrennungsluftmenge und somit grundsätzlich auf der Drehzahl des Elektromotors und der anzulegenden Spannung ermittelt werden, so dass nachfolgend im tatsächlichen Betrieb dann auf der Grundlage dieses Zusammenhangs bzw. dieser Kennlinie eine gewünschte Drehzahl einfach durch Vorgeben und Anlegen einer bestimmten zugeordneten Spannung erlangt werden kann, wobei selbstverständlich eine Einregelung der angelegten Spannung stattfinden kann.

Bei der Fertigung von Elektromotoren, beispielsweise für derartige Verbrennungsluftgebläse, existieren naturgemäß Fertigungstoleranzen. Diese Fertigungstoleranzen führen dazu, dass es zwischen verschiedenen Elektromotoren Unterschiede der bei einer bestimmten angelegten Spannung sich einstellenden Drehzahl geben wird bzw. der zum Erhalt einer bestimmten Drehzahl erforderlichen Spannung geben wird. Insbesondere dann, wenn beim Einsatz derartiger Elektromotoren keine Drehzahlregelung stattfindet, kann dies zu Abweichungen vom gewünschten Betriebsverhalten führen.

Die FR 2661 759 A offenbart ein Verfahren zur Einstellung der Fördermenge eines Heizluftgebläses, bei welchem Verfahren ein Zusammenhang zwischen der Drehzahl eines Antriebselektromotors des Gebläses und der daran angelegten Versorgungsspannung ermittelt wird. Auf der Grundlage des so ermittelten Zusammenhangs zwischen der Drehzahl und der Versorgungsspannung wird zur Erlangung einer gewünschten Fördermenge die an den Elektroantriebsmotor anzulegende Spannung ausgewält.

Aus der DE 101 18 224 C ist ein Verfahren bekannt, mittels welchem die Drehzahl eines elektromotorisch angetriebenen Ventilators eines Lüftungsgerätes geregelt wird. Bei diesem Verfahren wird zur Anpassung der elektrischen Steuerspannung eine Kalibrierung über gespeicherte Kennlinien vorgenommen.

Die US 6,422,944 A offenbart ein Gebläse mit einem elektromotorisch zur Drehung angetriebenen Gebläserad. Die Drehzahl des Motors wird in Abhängigkeit verschiedener gebläsespezifischer Parameter eingestellt. So wird beispielsweise die Ist-Drehzahl des Gebläserads gemessen und mit einem einer Soll-Drehzahl entsprechenden Steuersignal verglichen. Neben der Ist-Drehzahl und dem Ist-Motorstrom oder dem Versorgungsstrom, welche einem Mikrokontroller als Eingangssignalvariablen zugeführt werden, werden weitere Daten, wie z. B. der Durchmesser des Gebläserads, die Dichte des zu fördernden Mediums, Gebläsekoeffizient, Motorkoeffizienten sowie eine vorgegebene virtuelle Charakteristikkurve in dem Mikrokontroller als Ausgangswerte gespeichert. Der Mikrokontroller erzeugt auf Grundlage dieser Größe ein Soll-Drehzahlsignal, welches dann mit der Ist-Drehzahl zu vergleichen ist.

Es ist die Aufgabe der vorliegenden Erfindung ein Heizgerät für ein Fahrzeug sowie ein Verfahren zum Betreiben eines Elektromotors vorzusehen, mit welchen in einfacher und wirkungsvoller Art und Weise fertigungsbedingte Abweichungen im Betriebsverhalten von Elektromotoren kompensiert werden können.

Gemäß einem ersten Aspekt der vorliegenden Erfindung wird diese Aufgabe gelöst durch ein Heizgerät für ein Fahrzeug, umfassend ein Verbrennungsluftgebläse mit einem Elektromotor und ein Ansteuergerät zum Anlegen einer Spannung an den Elektromotor, wobei das Ansteuergerät die an den Elektromotor anzulegende Soll-Betriebsspannung beruhend auf einer geforderten Soll-Grundspannung und einer in Zuordnung zu dem anzusteuernden Elektromotor vor dem Integrieren des Elektromotors in das Heizgerät ermittelten und in dem Ansteuergerät abgespeicherten, Fertigungstoleranzen des Elektromotors repräsentierenden Korrekturgröße bestimmt.

Gemäß der vorliegenden Erfindung wird also in Zuordnung zu jedem Elektromotor eine Größe ermittelt, die im Prinzip die bei der Fertigung dieses konkreten Elektromotors aufgetretenen Toleranzen hinsichtlich seines Betriebsverhaltens reflektiert. Wird diese Korrekturgröße dann im tatsächlichen Betrieb des Heizgeräts bzw. des Elektromotors desselben berücksichtigt, so kann ohne Erfassung und Berücksichtigung der tatsächlichen Drehzahl des Elektromotors dafür gesorgt werden, dass dieser tatsächlich so betrieben wird, wie es an sich vorgegeben ist.

Erfindungsgemäß wird die Korrekturgröße für den Elektromotor vor der Fertigstellung des diesen Elektromotor aufweisenden Geräts ermittelt und in dem Ansteuergerät abgespeichert. Dies heißt also, dass im Sinne der vorliegenden Erfindung ein Heizgerät, ungeachtet möglicher weiterer Fertigstellungsarbeiten, so lange als nicht fertiggestellt betrachtet werden kann, solange in Zuordnung zu einem bestimmten Elektromotor nicht die dessen Fertigungstoleranzen repräsentierende Korrekturgröße ermittelt worden ist. Diese Ermittlung der Korrekturgröße findet statt, bevor ein bestimmter Elektromotor überhaupt in das System des Heizgeräts integriert wird.

Gemäß einem weiteren Aspekt der vorliegenden Erfindung wird die eingangs genannte Aufgabe gelöst durch ein Verfahren zum Betreiben eines Elektromotors für ein Verbrennungsluftgebläse eines Fahrzeugheizgeräts, umfassend die Schritte:
a) Ermitteln einer Fertigungstoleranzen eines Elektromotors repräsentierenden Korrekturgröße in Zuordnung zu dem Elektromotor auf der Grundlage einer zum Erhalt einer vorgegebenen Drehzahl des Elektromotors erforderlichen Betriebsspannung und einer für die vorgegebene Drehzahl vorgegebenen Grundspannung vor dem Integrieren des Elektromotors in ein Fahrzeugheizgerät,
b) Speichern der Korrekturgröße in einem Ansteuergerät,
c) für einen geforderten Betrieb des Elektromotors, Bestimmen einer an den Elektromotor anzulegenden Soll-Betriebsspannung auf der Grundlage einer für den geforderten Betrieb vorgegebenen Soll-Grundspannung und der Korrekturgröße.

Bei diesem erfindungsgemäßen Verfahren kann so vorgegangen werden, dass die Korrekturgröße nur für einen Grundspannungswert ermittelt wird, und somit nur eine einzige Korrekturgröße auch für einen größeren Variationswert der im Betrieb an einen Elektromotor anzulegenden Spannung genutzt wird. Alternativ ist es selbstverständlich möglich, für mehrere verschiedene Grundspannungswerte zugeordnete Korrekturgrößen zu ermitteln und dann beispielsweise im Betrieb jeweils diejenige Korrekturgröße auszuwählen, deren zugeordnete Grundspannung am nächsten bei der an den Elektromotor anzulegenden Spannung bzw. Soll-Grundspannung ist.

Die vorliegende Erfindung wird nachfolgend mit Bezug auf die beiliegenden Zeichnungen beschrieben. Es zeigt:
- Fig. 1: eine Prinzipansicht eines Fahrzeugheizgeräts;
- Fig. 2: den Zusammenhang zwischen der an einen Elektromotor anzulegenden Spannung und der Drehzahl des Elektromotors.

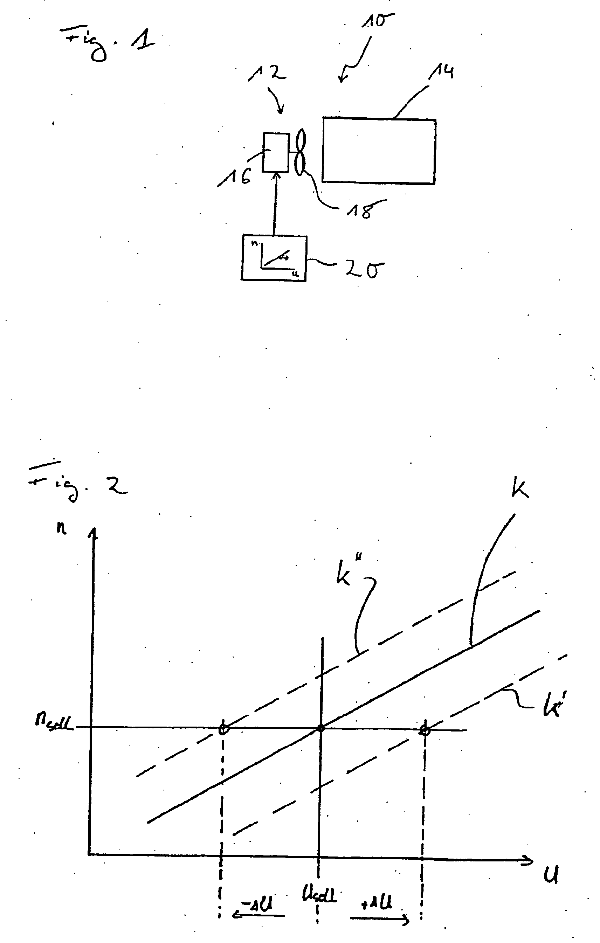

In Fig. 1 ist ein Heizgerät, wie es beispielsweise für ein Fahrzeug eingesetzt werden kann, allgemein mit 10 bezeichnet. Dieses Heizgerät 10 weist ein Verbrennungsluftgebläse 12 auf, durch welches Verbrennungsluft in einen nur schematisch angedeuteten Brennerbereich 14 gefördert werden kann. Das Verbrennungsluftgebläse 12 wiederum umfasst einen Elektromotor 16, welcher ein Förderrad 18 zur Drehung antreibt. Diesem Elektromotor 16 und möglicherweise noch weiteren anzusteuemden Systembereichen insbesondere des Brennerbereichs 14, beispielsweise einer Dosierpumpe, eines Zündorgans und dergleichen, ist ein Ansteuergerät 20 zugeordnet. Um Verbrennungsluft in den Brennerbereich 14 zu leiten, legt das Ansteuergerät 20 eine Spannung an den Elektromotor 16 an. Da grundsätzlich, wie nachfolgend noch beschrieben, ein definierter Zusammenhang zwischen der angelegten Spannung und der Drehzahl des Elektromotors 16 besteht, ist es grundsätzlich nicht erforderlich, zum Erhalt einer gewünschten Fördermenge und somit einer gewünschten Drehzahl des Elektromotors 16, dessen Drehzahl auch zu überwachen. Vielmehr kann empirisch in Zuordnung zu einem bestimmten Heizgerät 10 ermittelt werden, welche Drehzahl des Elektromotors 16 erforderlich ist, um eine bestimmte Verbrennungsluftmenge zu fördern, beispielsweise auch in Abhängigkeit vom Umgebungsdruck, so dass dann auch auf Grund des bekannten Zusammenhangs zwischen der Drehzahl und der an den Elektromotor 16 dann anzulegenden Spannung allein durch Vorgabe einer bestimmten Spannung in Zuordnung zu einem gewünschten Betrieb, also einer gewünschten Verbrennungsluftmenge, die Ansteuerung des Elektromotors 16 erfolgen kann.

Dieser Zusammenhang zwischen der Drehzahl n des Elektromotors 16 und der an diesen anzulegenden Spannung U ist in Fig. 2 gezeigt. Hier zeigt eine durchgezogene Kennlinie K den für einen bestimmten Typ eines Elektromotors zu erwartenden bzw. theoretischen Kennlinienverlauf, der beispielsweise die Form einer Geraden hat. Soll also eine Drehzahl nₛₒₗₗ, erreicht werden, so müsste durch das Ansteuergerät 20 die Spannung Uₛₒₗₗ angelegt werden. Um dabei einen präzisen Betrieb des Elektromotors 16 sicherstellen zu können, kann so vorgegangen werden, dass eine Spannungsregelung auf diesen Wert Uₛₒₗₗ vorgenommen wird. Grundsätzlich könnte jedoch das Anlegen dieser Spannung ohne regelungstechnische Überwachung erfolgen.

Wird derart vorgegangen, besteht jedoch grundsätzlich das Problem, dass fertigungsbedingt nicht alle Elektromotoren exakt den gleichen Verlauf ihrer theoretischen Kennlinie K aufweisen werden. Es wird mehr oder weniger große Abweichungen geben, die den Bereich von 10% der angelegten bzw. anzulegenden Spannung überschreiten können. Derartige Abweichungen würden auch eine nicht unbeachtliche Abweichung in der geförderten Verbrennungsluftmenge zur Folge haben, was wiederum im Verbrennungsbetrieb zu einer erhöhten Schadstoffemission führen kann bzw. einer verminderten Betriebseffizienz führen kann.

Um diesem Problem entgegenzutreten, wird erfindungsgemäß in Zuordnung zu jedem in ein Heizgerät 10 zu integrierenden Elektromotor 16 die bei diesem vorhandene Abweichung von der theoretisch vorhandenen Kennlinie K ermittelt. Dazu wird so vorgegangen, dass auf einem Prüfstand und noch vor dem Integrieren in das Heizgerät 10 ein Elektromotor 16 so betrieben wird, dass er mit einer bestimmten Drehzahl, beispielsweise wieder nₛₒₗₗ in Fig. 2, dreht. Theoretisch müsste dabei festgestellt werden, dass die Spannung Uₛₒₗₗ anliegt. Im Allgemeinen wird dies jedoch nicht der Fall sein, sondern es wird beispielsweise eine Abweichung ΔU nach oben oder nach unten geben, so dass sich grundsätzlich verschobene Kennlinienverläufe K' oder K" ergeben würden. Die bei diesem Überprüfen eines bestimmten Elektromotors 16 festgestellte Abweichung ΔU wird selbstverständlich auch unter Berücksichtigung des vorhandenen Vorzeichens der Abweichung in dem diesem konkreten Elektromotor 16 dann zugeordneten Ansteuergerät 20 abgespeichert. Im Betrieb kann dann so vorgegangen werden, dass bei Vorgabe eines gewünschten Betriebs anhand des in Fig. 2 mit der theoretisch vorhandenen Kennlinie K definierten Zusammenhangs beispielsweise wieder in Zuordnung zur erforderlichen Drehzahl nₛₒₗₗ die Spannung Uₛₒₗₗ als Soll-Grundspannung vorgegeben wird, diese Spannung dann beispielsweise durch Addieren kombiniert wird mit der ermittelten Korrekturgröße ΔU, um eine Soll-Betriebsspannung zu ermitteln, und diese Soll-Betriebsspannung dann an den Elektromotor 16 angelegt bzw. eingeregelt wird.

Es kann somit einfach und mit hoher Präzision sichergestellt werden, dass für einen bestimmten geforderten Betrieb auch die entsprechende Verbrennungsluftmenge zur Verfügung gestellt wird.

Da im Allgemeinen derartige Elektromotoren 16 im Betrieb von Heizgeräten 10 nur in einem begrenzten Spannungsfenster von beispielsweise 6V bis 10V betrieben werden, und da in diesem Spannungsfenster davon ausgegangen werden kann, dass in Zuordnung zu den verschiedenen Spannungswerten bzw. Grundspannungswerten näherungsweise jeweils gleiche Korrekturgrößen ΔU vorhanden sind, kann es ausreichen, beispielsweise die Korrekturgröße in Zuordnung zu einem im mittleren Bereich des Betriebsspannungsfensters liegenden Grundspannungswert zu ermitteln und diesen einen Wert der Korrekturgröße dann für alle im Betrieb dann auftretenden Spannungswerte heranzuziehen. Es könnte aber auch so vorgegangen werden, dass in Zuordnung zu mehreren Grundspannungswerten Korrekturgrößen ΔU bestimmt werden und beispielsweise dann im konkreten Betrieb zu einer vorgegebenen Soll-Grundspannung immer diejenige Korrekturgröße herangezogen wird, deren zugeordnete Grundspannung am nächsten bei der Soll-Grundspannung liegt. Auch könnte bei mehreren Korrekturgrößen die einer bestimmten Soll-Grundspannung zugeordnete Korrekturgröße durch Interpolieren ermittelt werden.

Insbesondere bei größeren Spannungsfenstem, die beispielsweise auch bis an den Nullpunkt heranreichen, könnte auch vorgesehen sein, mit einem im Versuch ermittelten Wert der Korrekturgröße ΔU zu arbeiten und diesen Wert jeweils zu skalieren. Diese Skalierung könnte so erfolgen, dass der Quotient aus demjenigen Grundspannungswert, bei dem der Korrekturwert ermittelt worden ist, und der Soll-Grundspannung, die für einen bestimmten Betriebszustand auszuwählen wäre, gebildet wird. Entspricht die Soll-Grundspannung der Grundspannung, so ist der Quotient 1 und somit die Korrekturgröße direkt heranzuziehen. Bei Annähern an den Spannungswert 0 nimmt durch diese Art der Skalierung die Korrekturgröße immer stärker ab. Es ist selbstverständlich, dass auch andere als derartige lineare Skalierungen hier vorgesehen werden können.

## Patentansprüche

1. Heizgerät für ein Fahrzeug, umfassend ein Verbrennungsluftgebläse (12) mit einem Elektromotor (16) und ein Ansteuergerät (20) zum Anlegen einer Spannung an den Elektromotor (16), **dadurch gekennzeichnet, dass** das Ansteuergerät (20) die an den Elektromotor anzulegende Soll-Betriebsspannung beruhend auf einer geforderten Soll-Grundspannung und einer in Zuordnung zu dem anzusteuernden Elektromotor (16) vor dem Integrieren des Elektromotors (16) in das Heizgerät ermittelten und in dem Ansteuergerät (20) abgespeicherten, Fertigungstoleranzen des Elektromotors (16) repräsentierenden Korrekturgröße (ΔU) bestimmt.

2. Verfahren zum Betreiben eines Elektromotors (16) für ein Verbrennungsluftgebläse (12) eines Fahrzeugheizgeräts (10), umfassend die Schritte:
a) Ermitteln einer Fertigungstoleranzen eines Elektromotors (16) repräsentierenden Korrekturgröße (ΔU) in Zuordnung zu dem Elektromotor (16) auf der Grundlage einer zum Erhalt einer vorgegebenen Drehzahl des Elektromotors (16) erforderlichen Betriebsspannung und einer für die vorgegebene Drehzahl vorgegebenen Grundspannung vor dem Integrieren des Elektromotors (16) in ein Fahrzeugheizgerät,
b) Speichern der Korrekturgröße (ΔU) in einem Ansteuergerät (20),
c) für einen geforderten Betrieb des Elektromotors (16), Bestimmen einer an den Elektromotor (16) anzulegenden Soll-Betriebsspannung auf der Grundlage einer für den geforderten Betrieb vorgegebenen Soll-Grundspannung und der Korrekturgröße (ΔU).

3. Verfahren nach Anspruch 2, **dadurch gekennzeichnet, dass** die Korrekturgröße (ΔU) für einen Grundspannungswert ermittelt wird.

4. Verfahren nach Anspruch 2, **dadurch gekennzeichnet, dass** für mehrere verschiedene Grundspannungswerte jeweils zugeordnete Korrekturgrößen (ΔU) ermittelt werden.

## Claims

1. A heating device for a vehicle, comprising a combustion air blower (12) with an electric motor (16) and a control device (20) for applying a voltage to the electric motor (16), **characterized by** the control device determining the target operating voltage to be applied to the electric motor on the basis of a required target basic voltage and a correction variable (ΔU) representing manufacturing tolerances of the electric motor (16) determined in association to the electric motor (16) to be driven prior to integrating the electric motor (16) into the heating device and stored in the control device (20).

2. A method for operating an electric motor (16), in particular for a combustion air blower (12) of a vehicle heating device (10), comprising the following steps:
a) prior to integrating an electric motor (16) into a heating device, determining a correction variable (ΔU) representing manufacturing tolerances of the electric motor (16) in association to the electric motor (16) on the basis of an operating voltage required for obtaining a predetermined rotational speed of the electric motor (16) and a basic voltage specified for the predetermined rotational speed,
b) storing said correction variable (ΔU) in a control device (20),
c) for a required operation of said electric motor (16), determining a required operating voltage to be applied to the electric motor (16) on the basis of a required target basic voltage specified for the required operation and the correction variable (ΔU).

3. The method according to claim 2, **characterized by** said correction variable (ΔU) being determined for a basic voltage value.

4. The method according to claim 2, **characterized by** associated correction variables (ΔU) being determined for several different basic voltage values.

## Revendications

1. Un dispositif de chauffage pour un véhicule, comprenant un ventilateur d'air de combustion (12) avec un moteur électrique (16) et un dispositif de contrôle (20) pour appliquer une tension électrique au moteur électrique (16), **caractérisé par** le dispositif de contrôle déterminant la tension de service cible à appliquer au moteur électrique sur la base d'une tension de base cible requise et une variable de correction (ΔU) représentant des tolérances de fabrication identifiée en association au moteur électrique (16) à commander avant d'intégrer le moteur électrique (16) dans le dispositif de chauffage et étant mémorisée dans le dispositif de contrôle (20).

2. Une méthode pour opérer un moteur électrique (16), en particulier pour un ventilateur d'air de combustion (12) d'un dispositif de chauffage pour un véhicule (10), comprenant les étapes suivantes :
a) avant d'intégrer un moteur électrique (16) dans le dispositif de chauffage, déterminer une variable de correction (ΔU) représentant des tolérances de fabrication du moteur électrique (16) en association au moteur électrique (16) sur la base d'une tension de service requise pour obtenir une vitesse de rotation définie du moteur électrique (16) et d'une tension de base définie pour la vitesse de rotation prédéterminée,
b) mémoriser la variable de correction (ΔU) dans un dispositif de contrôle (20),
c) pour un service requis du moteur électrique (16) déterminer une tension de service cible à appliquer au moteur électrique (16) sur la base d'une tension de base cible définie pour le service requis et de la variable de correction (ΔU).

3. La méthode selon la revendication 2, **caractérisée par** la variable de correction (ΔU) étant déterminée pour une valeur de tension de base.

4. La méthode selon la revendication 2, **caractérisée par** des variables de correction (ΔU) associées étant déterminées pour plusieurs valeurs de tension de base différentes.
